Europäisches Patentamt

European Patent Office

Office européen des brevets

(19)

(11) EP 1 322 045 A1

(12) **EUROPEAN PATENT APPLICATION**
published in accordance with Art. 158(3) EPC

(43) Date of publication:
25.06.2003 Bulletin 2003/26

(21) Application number: 02758806.0

(22) Date of filing: 08.08.2002

(51) Int Cl.7: **H04B 1/707**

(86) International application number:
**PCT/JP02/08102**

(87) International publication number:
**WO 03/015304 (20.02.2003 Gazette 2003/08)**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: 08.08.2001 JP 2001241245

(71) Applicant: **MATSUSHITA ELECTRIC INDUSTRIAL
CO., LTD.**
**Kadoma-shi, Osaka 571-8501 (JP)**

(72) Inventors:
• **HASHIGUCHI, Koichi**
**Yokosuka-shi, Kanagawa 239-0807 (JP)**
• **MIYA, Kazuyuki**
**Asao-ku, Kawasaki-shi, Kanagawa 215-0021 (JP)**
• **ARIMA, Takenobu**
**Yokosuka-shi, Kanagawa 239-0847 (JP)**

(74) Representative: **Grünecker, Kinkeldey,
Stockmair & Schwanhäusser Anwaltssozietät
Maximilianstrasse 58
80538 München (DE)**

(54) **RADIO RECEPTION APPARATUS AND RADIO RECEPTION METHOD**

(57) When carrying out a weighted addition on the in-phase added values of pilot signals and simulated pilot signals of the data section about the nth slot, the channel estimation circuit 104 controls the weighting factors according to the number of iterations of channel estimation. That is, the channel estimation circuit 104 carries out channel estimation by decreasing weights of simulated pilot signals in addition to pilot signals in a stage in which the number of iterations is small and by increasing weights of simulated pilot signals in addition to pilot signals in a stage in which the number of iterations is large. In iterative channel estimation, this makes it possible to improve the accuracy of channel estimation in the initial stage and carry out high accuracy channel estimation with a small number of iterations of recursive channel estimation.

FIG. 6

**Description**

Technical Field

The present invention relates to an apparatus and method for radio reception used in a digital radio communication system.

Background Art

(Prior art 1)

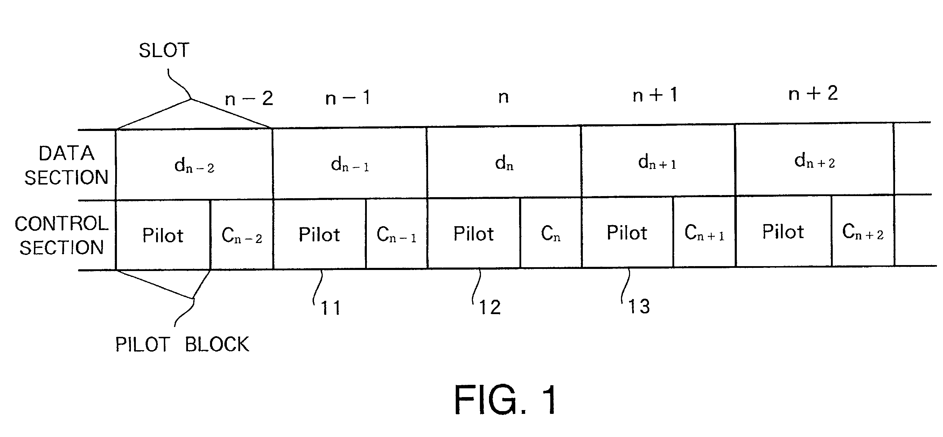

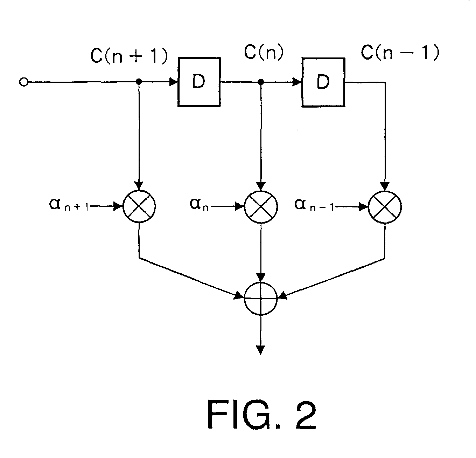

Conventionally, a method for carrying out channel estimating using a plurality of pilot blocks according to a pilot interpolation type communication system (a system that inserts pilot signals (known signals) into an information signal periodically) is proposed by Ando et al. (RCS96-72 "Channel Estimation Scheme using the Plural Pilot Blocks for DS-CDMA Mobile Radio"). This channel estimation method will be explained with reference to FIG.1 and FIG.2 below.

FIG.1 illustrates a slot format used in a conventional pilot interpolation type communication system. In this figure, one slot consists of a data section that stores data multiplexed with a control section that stores pilot signals and a control signal, and two slots before and after one slot n in the center are shown. The pilot signals stored (interpolated) in the control section are composed of $N_p$ symbols and suppose a group of pilot signals composed of $N_p$ symbols is called a "pilot block." The conventional pilot interpolation type communication system estimates a propagation path (channel), which is changing due to multipath Rayleigh fading using these pilot signals interpolated in each slot.

Here, the conventional channel estimation method will be explained briefly. First, focused on a pilot block 12 in the nth slot, all pilot signals composed of $N_p$ symbols in the pilot block 12 are added up in phase. The resulting in-phase added value is expressed by the following expression (1), where $z(i)$ is a pilot signal to be added up in phase and $C(n)$ is an in-phase added value in the nth pilot block.

[Mathematical expression 1]

$$C(n) = \frac{1}{N_p} \sum_{i=0}^{N_p-1} z_n(i) \qquad \cdots \quad (1)$$

The "in-phase addition" refers to averaging detected correlation peak values of a plurality of pilot signals expressed in complex amplitudes.

Then, the in-phase added values are subjected to a weighted addition. The configuration for realizing this will be shown in FIG.2. FIG.2 is a schematic view showing a configuration for carrying out a weighted addition on the in-phase added values at a conventional reception apparatus. As shown in FIG.2, a weighted addition is carried out on in-phase added values using pilot blocks of the nth slot and one slot before and one slot after the nth slot ((n-1)th slot and (n+1)th slot). The resulting value is the channel estimated value of the nth slot. This channel estimated value is expressed by the following expression (2), where $\alpha_n$ is a weighting factor of the nth slot.

[Mathematical expression 2]

$$\xi(n) = \sum_{i=-K}^{K} \alpha_n C(n) \qquad \cdots \quad (2)$$

By the way, FIG.2 shows the case where one slot before and one slot after the nth slot are used, but it is also possible to use K slots (K: arbitrary positive number) before and after the nth slot.

Using the channel estimated values calculated in this way, coherent detection for restituting a phase variation of the nth slot is performed and RAKE combining is carried out.

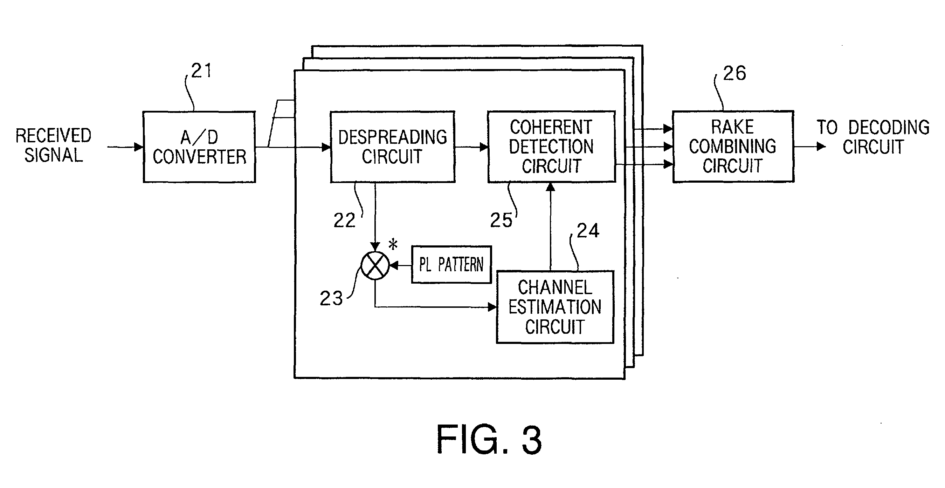

Then, the configuration of the reception apparatus to realize the above-described channel estimation will be explained using FIG.3. FIG.3 is a block diagram showing a configuration of the conventional reception apparatus.

In FIG.3, a received signal is A/D-converted at an A/D converter 21, the A/D-converted received signal is despread at a despreading circuit 22. Pilot signals of the despread received signal are output to a multiplier 23 and the despread data signal is output to a coherent detection circuit 25. The despread pilot signals are multiplied by a complex conjugate of a known pilot pattern on the receiving side at the multiplier 23 and the multiplication result is output to a channel estimation circuit 24. Based on the multiplied signal output from the multiplier 23, the channel estimation circuit 24 obtains a channel estimated value and outputs the channel estimated value to the coherent detection circuit 25. The channel estimation circuit will be explained in detail later.

For the data signal despread by the despreading circuit 22, its phase variation is restituted at the coherent detection circuit 25 based on the channel estimated value calculated by the channel estimation circuit 24 and output to a RAKE combining circuit 26.

The above-described despreading circuit 22, multiplier 23, channel estimation circuit 24 and coherent detection circuit 25 are provided for each finger (FIG.3 shows an example where the number of fingers is 3). The data signals at the respective fingers subjected to coherent detection by the coherent detection circuit 25 are RAKE-combined by the RAKE combining circuit 26.

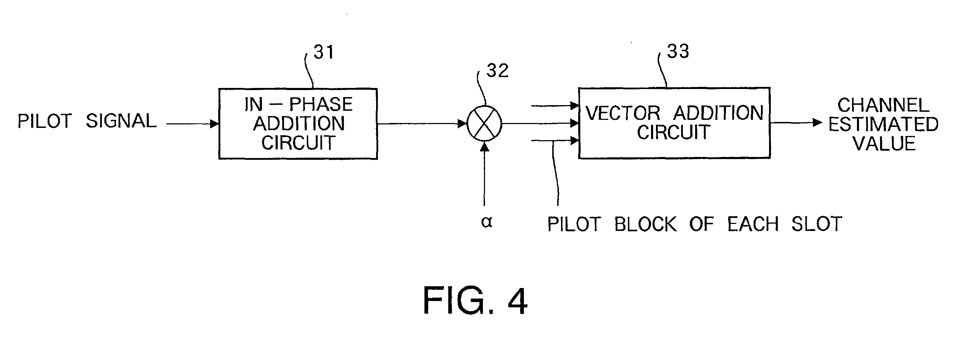

Then, the configuration of the channel estimation circuit 24 will be explained using FIG.4. FIG.4 is a block diagram showing a configuration of the channel estimation circuit of the conventional reception apparatus. The channel estimation circuit 24 performs channel estimation using despread pilot signals and obtains a channel estimated value for coherent detection. More specifically, all $N_p$ symbols of the despread pilot signals (that is, pilot signals of the nth pilot block in aforementioned FIG.1) are added up in phase at an in-phase addition circuit 31 as shown in FIG.4. This in-phase addition is expressed by the above-described expression (1). The in-phase added value obtained at the in-phase addition circuit 31 is multiplied by a weighting factor $\alpha$ at a multiplier 32. For example, the in-phase added value of the nth pilot block 12 is multiplied by a weighting factor $\alpha_n$. This multiplication is expressed by the above-described expression (2). The result of multiplication by the weighting factor $\alpha$ is a channel estimated value and the channel estimated value is output to a vector addition circuit 33.

The vector addition circuit 33 carries out a vector addition between the channel estimated value output from the multiplier 32 and channel estimated values obtained from other pilot blocks. For example, the channel estimated value of the pilot block 12 obtained by multiplying the nth pilot block by the weighting factor $\alpha_n$ is subjected to a vector addition with the channel estimated value of the pilot block 11 multiplied by a weighting factor $\alpha_{n+1}$ and the channel estimated value of the pilot block 13 multiplied by a weighting factor $\alpha_{n-1}$. In this way, a channel estimated value averaged by a plurality of slots centered on the nth slot is obtained.

Thus, the channel estimated value obtained by the channel estimation circuit 24 is output to the coherent detection circuit 25 shown in FIG.1.

However, the number of samples (corresponding to $N_p$ symbols) of pilot signals is not enough to carry out channel estimation accurately.

(Prior art 2)

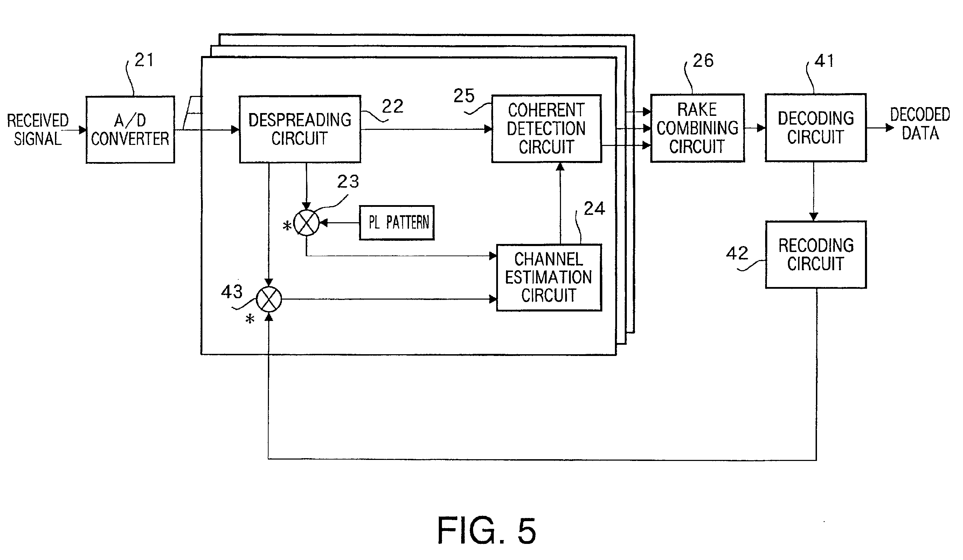

On the other hand, in order to carry out more accurate channel estimation, a method using signals other than pilot signals is proposed by Suwa et al. (RCS2000-67 "Iterative Decision-Directed Path Search and Channel Estimation with Fast Fading Tracking Ability for MC/DS-CDMA Broadband Packet Wireless Access") . This is an iterative channel estimation method in a pilot interpolation type communication system, which carries out coherent detection using a channel estimated value obtained at an nth slot, carries out RAKE combining and then removes a data modulation component of the signal part other than pilot signals using a result of a hard decision carried out on the signal section other than pilot signals or recoded signals and adds the resulting signal to the in-phase added value calculated from the nth pilot block. Here, the slot configuration in this conventional example is a configuration obtained by IQ-multiplexing pilot signals and control signal (Cn) of the control section with data signal (dn) of the data section. Suppose the control signal (Cn) of the control section together with the data signal (dn) of the data section are considered to be the signal sections (Cn, dn) other than the pilot signals . This channel estimation system will be explained with reference to FIG.5 below.

FIG.5 is a block diagram showing a configuration of a reception apparatus that carries out conventional iterative channel estimation. Here, a configuration for recoding a decoded signal and carrying out iterative channel estimation will be explained. In FIG.5, the components common to those in FIG.3 are assigned the same reference numerals as those in FIG.3 and detailed explanations thereof will be omitted.

In FIG.5, pilot signals despread by a despreading circuit 22 are output to a multiplier 23. The pilot signals multiplied by a complex conjugate of a known pilot pattern at the multiplier 23 are output to a channel estimation circuit 24. On the other hand, a data signal of the data section despread by the despreading circuit 22 is output to a coherent detection circuit 25 and a multiplier 43. Data signals subjected to coherent detection by the coherent detection circuit 25 at respective fingers are RAKE-combined at a RAKE combining circuit 26 and output to a decoding circuit 41. The decoding circuit 41 carries out forward error correction on the RAKE combining result and outputs the decoding result as decoded data on one hand, and outputs the decoding result to a recoding circuit 42 on the other (the process until the first recoding is carried out at each slot will be referred to as "initial stage"). The signal output from the decoding circuit 41 is recoded at the recoding circuit 42 and used at the multiplier 43 to remove the data modulation component of the signal section other than pilot signals. The signal stripped of the modulation component is used to resemble pilot signals, and is therefore referred to as "simulated pilot signal" hereafter.

At the coherent detection circuit 25, a phase variation of the signal despread by the despreading circuit 22 is restituted using a channel estimated value obtained by adding the in-phase added value of the simulated pilot signals to the in-phase added value of pilot signals calculated at the channel estimation circuit 24.

Since channel estimation is carried out recursively several times at the same slot, errors in the decoded data signal are reduced, and therefore the accuracy of channel estimation is improved and errors in data signals are further reduced.

Problems to be Solved by the Invention

However, the above-described conventional reception apparatus involves the following problems. When pilot signals and simulated pilot signals are subjected to in-phase additions in iterative channel estimation, these signals are added up at an equal ratio every time, and therefore influences of errors in simulated pilot signals are strong in a stage in which the number of iterations of channel estimation is small, leading to deterioration of the reception quality.

Furthermore, when an amount of phase rotation due to fading is large for a period during which pilot signals are inserted, it is not possible to obtain high accuracy channel estimated values unless influences of K slots before and after the phase variation are reduced.

Furthermore, in iterative channel estimation, in-phase added values of pilot signals and simulated pilot signals include influences of noise for each symbol, which prevents high accuracy channel estimated values from being obtained. Thus, when the number of iterations is small, it is not possible to obtain high accuracy channel estimated values unless averaging is carried out on K slots before and after using WMSA (Weighted Multi Slot Averaging), which leads to deterioration of the reception quality.

Thus, with the above-described conventional reception apparatus, high accuracy channel estimated values cannot be obtained even if channel estimation is repeated recursively and the reception quality deteriorates.

Disclosure of Invention

It is an object of the present invention to provide an apparatus and method for radio reception capable of improving the accuracy of channel estimation in an initial stage of iterative channel estimation, reducing deterioration of reception quality of data signals and carrying out high accuracy channel estimation with a small number of iterations of channel estimation.

Brief Description of Drawings

FIG.1 illustrates a slot format used in a conventional pilot interpolation type communication system;

FIG.2 illustrates a configuration for carrying out a weighted addition on in-phase added values at a conventional reception apparatus;

FIG.3 is a block diagram showing a configuration of the conventional reception apparatus;

FIG.4 is a block diagram showing a configuration of a channel estimation circuit at the conventional reception apparatus;

FIG.5 is a block diagram showing a configuration of a reception apparatus that carries out conventional iterative channel estimation;

FIG.6 is a block diagram showing a configuration of a reception apparatus according to Embodiment 1 of the present invention;

FIG.7 is a block diagram showing a detailed configuration of the reception apparatus according to Embodiment 1 of the present invention;

FIG.8 is a block diagram showing a configuration of a reception apparatus according to Embodiment 2 of the present invention;

FIG.9 illustrates a slot format received by the reception apparatus according to Embodiment 2 of the present invention;

FIG.10 is a block diagram showing a configuration of a reception apparatus according to Embodiment 3 of the present invention;

FIG.11 is a block diagram showing another configuration of the reception apparatus according to Embodiment 3 of the present invention;

FIG.12 is a block diagram showing a further configuration of the reception apparatus according to Embodiment 3 of the present invention;

FIG.13 is a schematic view conceptually illustrating in-phase added values by the reception apparatus according to Embodiment 3 of the present invention; and

FIG.14 is a schematic view illustrating a configuration of a channel estimation circuit according to Embodiment 4 of the present invention.

Best Mode for Carrying out the Invention

The present inventor has come up with the present invention noticing in iterative channel estimation that in a stage in which the number of iterations of channel estimation is small, simulated pilot signals include influences of errors, and pilot signals and simulated pilot signals are added up in phase at a different ratio every time. That is, an essence of the present invention is to carry out iterative channel estimation using a weighting factor according to the number of iterations of channel estimation when weighted additions are applied to in-phase added values of pilot signals and simulated pilot signals.

With reference now to the attached drawings, embodiments of the present invention will be explained in detail below.

(Embodiment 1)

This embodiment will describe a case where when the number of iterations of channel estimation is 0 (hereinafter referred to as "initial stage"), channel estimation is carried out only using more reliable pilot signals than simulated pilot signals.

Here, the frame configuration in this embodiment is a configuration in which pilot signals and a control signal of a control section and a data signal of a data section are IQ-multiplexed. Suppose the control signal (Cn) of the control section and data signal (dn) of the data section together are considered as signal sections (Cn, dn) other than pilot signals.

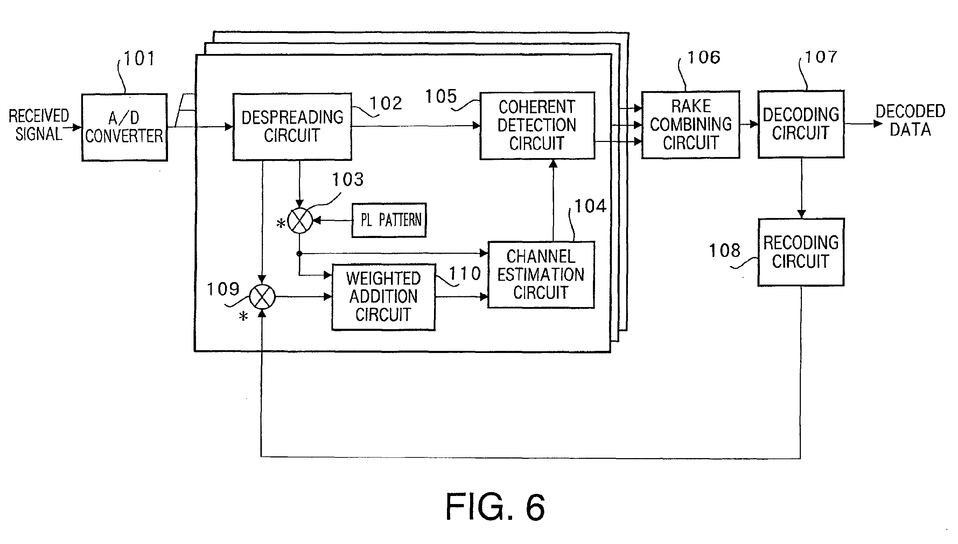

FIG.6 is a block diagram showing a configuration of a reception apparatus according to Embodiment 1 of the present invention. In FIG.6, a despreading circuit 102, a multiplier 103, a channel estimation circuit 104, a coherent detection circuit 105, a multiplier 109 and a weighted addition circuit 110 are provided for each finger (FIG. 6 shows an example where the number of fingers is 3). An A/D converter 101 A/D-converts a received signal and outputs to the despreading circuit 102. The despreading circuit 102 despreads the A/D-converted received signal and outputs pilot signals out of the despread received signal to the multiplier 103 and the signal sections (Cn, dn) other than the pilot signals to the coherent detection circuit 105 and multiplier 109. The multiplier 103 calculates a phase variation by multiplying the despread pilot signals by a complex conjugate of a known pilot pattern at the reception apparatus and outputs the multiplication result to the channel estimation circuit 104.

In the initial stage, the channel estimation circuit 104 calculates an in-phase added value of the pilot signals from the multiplication result output from the multiplier 103 and assigns weights to the channel estimated values at K slots before and after, and adds them up. After the initial stage (the number of iterations of channel estimation is 1 or greater), the weighted addition circuit 110 which will be described later assigns weights to the channel estimated values at K slots before and after, and adds them up based on the result after the weighted addition using the pilot signals and simulated pilot signals.

Assuming that a channel estimated value of the nth slot calculated by the channel estimation circuit 104 is $\zeta(n)$, the channel estimated value $\zeta(n)$ can be expressed as shown in the following expression (3) using channel estimated value $\xi_i(n\pm i)$ of K (K = 0, 1, ..., K) slots before and after the nth slot in the center and weighting factor $\alpha$.

[Mathematical expression 3]

$$\zeta_l^{(q)}(n) = \begin{cases} \sum_{i=0}^{K} \alpha_k^{(q)} \xi_l(n+i) & k \geq 0 \\ \sum_{i=-K}^{-1} \alpha_k^{(q)} \zeta_l(n+i) & k < 0 \end{cases} \quad \cdots \quad (3)$$

However, suppose $\zeta$ on the right side is a channel estimated value at the slot located ahead ((n-1)th slot) and iterative channel estimation is carried out. q denotes the number of iterations and here q=0. The channel estimated value calculated in this way is output to the coherent detection circuit 105.

The coherent detection circuit 105 restitutes the phase variation of the signal sections (Cn, dn) other than the pilot signals after despreading based on the channel estimated value calculated by the channel estimation circuit 104 and outputs to the RAKE combining circuit 106.

The RAKE combining circuit 106 carries out RAKE-combining, which adds up the signals, output from the coherent detection circuit 105 corresponding in number to the fingers and outputs to a decoding circuit 107. The decoding circuit 107 performs forward error correction, outputs the decoded signal as decoded data and outputs to a recoding circuit 108. The recoding circuit 108 recodes the signal decoded by the decoding circuit 107 and outputs to the multiplier 109.

The multiplier 109 multiplies Cn and dn despread by the despreading circuit 102 by a complex conjugate of the signal output from the recoding circuit 108. This removes the data demodulation component of the signal sections (Cn, dn) other than the pilot signals and generates simulated pilot signals. The generated simulated pilot signals are output to the weighted addition circuit 110.

The weighted addition circuit 110 multiplies the in-phase added value of the pilot signals, which is the multiplication result of the multiplier 103, and in-phase added value of the simulated pilot signals, which is the multiplication result of the multiplier 109, by weighting factors respectively, adds up the respective multiplication results and outputs the addition result to the channel estimation circuit 104. The channel estimation circuit 104 carries out channel estimation using signals output from the weighted addition circuit 110.

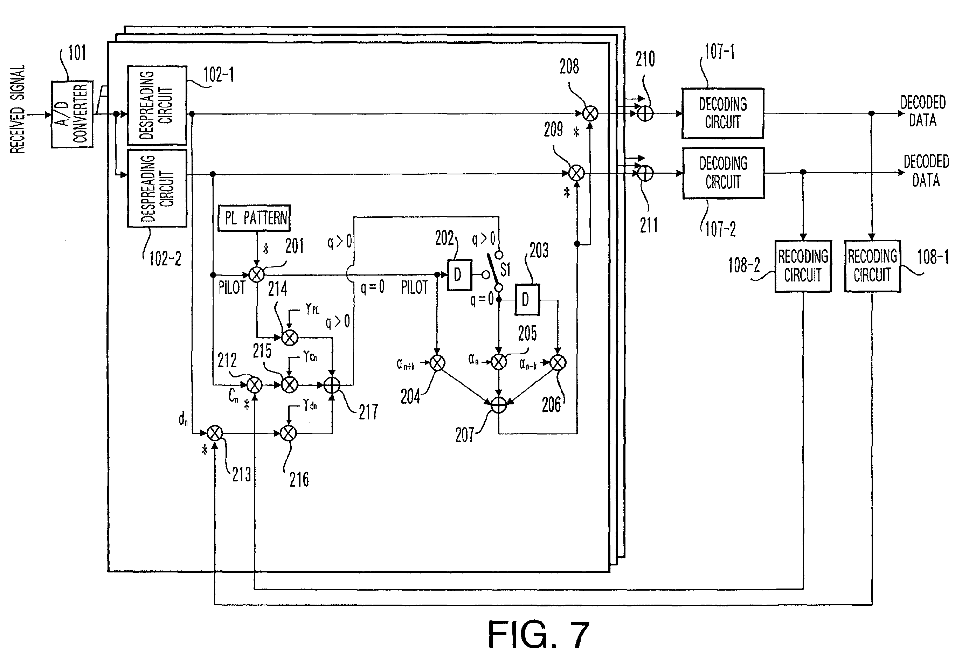

Then, how channel estimation is carried out on the pilot signals, Cn (control signal of the control section) and dn (data signal of the data section) separately will be explained using FIG.7. FIG.7 illustrates a detailed configuration of the reception apparatus according to Embodiment 1 of the present invention. In FIG.7, the components common to those in FIG.6 are assigned the same reference numerals as those in FIG.6.

In FIG.7, an A/D converter 101 A/D-converts a received signal and outputs the data signal (dn) to a despreading circuit 102-1 and outputs the control signal (Cn) and pilot signals to a despreading circuit 102-2.

The despreading circuit 102-1 despreads the data signal (dn), which has been A/D-converted by the A/D converter 101, and outputs to a multiplier 208 and a multiplier 213. The despreading circuit 102-2 despreads the control signal (Cn) and pilot signals which have been A/D-converted by the A/D converter 101 and outputs the despread pilot signals to a multiplier 201 and outputs the despread control signal (Cn) to a multiplier 209 and multiplier 212.

The multiplier 201 is equivalent to the multiplier 103 in FIG.6 and multiplies the pilot signals despread by the despreading circuit 102-2 by a complex conjugate of a known pilot pattern at the reception apparatus. In this way, the in-phase added value of the pilot signals is calculated and this in-phase added value is output to a delayer 202, a multiplier 204 and multiplier 214.

The delayer 202 delays the in-phase added value corresponding to one slot output from the multiplier 201 by an amount equivalent to one slot. In the initial stage (q=0), a switch 1 (S1) is connected to an output terminal of the delayer 202 and the in-phase added value delayed one slot by the delayer 202 is output to a delayer 203 and a multiplier 205. As in the case of the delayer 202, the delayer 203 delays the input signal by one slot and outputs to a multiplier 206.

The multiplier 204, multiplier 205 and multiplier 206 multiply the in-phase added values of the respective slots by weighting factors. The multiplier 204 multiplies the signal output from the multiplier 201 by a weighting factor $\alpha_{n+K}$, the multiplier 205 multiplies the signal output from the delayer 202 by a weighting factor $\alpha_n$, and the multiplier 206 multiplies the signal output from the delayer 203 by a weighting factor $\alpha_{n-K}$, and output their respective multiplication results to an adder 207. The adder 207 adds up the channel estimated values weighted by the multiplier 204, multiplier 205 and multiplier 206. In this way, channel estimated values of K slots before and after the nth slot output from the multiplier 205 in the center are added up. The addition result of the adder 207 is output to a multiplier 208 and a multiplier 209.

The multiplier 208 and the multiplier 209 are equivalent to the coherent detection circuit 105 in FIG. 6. The multiplier 208 restitutes the phase variation of the despread data signal (dn) by multiplying the data signal (dn) despread by the despreading circuit 102 by a complex conjugate of the channel estimated value output from the adder 207. The data signal (dn) whose phase variation has been restituted is output to the adder 210. Furthermore, the multiplier 209 also restitutes the phase variation of the despread control signal (Cn) by multiplying the control signal (Cn) despread by the despreading circuit 102-2 by a complex conjugate of the channel estimated value output from the adder 207. The control signal (Cn) whose phase variation has been restituted is output to an adder 211.

The adder 210 and adder 211 are equivalent to the RAKE combining circuit 106 in FIG.6. The adder 210 adds up the data signals (dn) whose phase variation has been restituted by the multiplier 208 of the respective fingers and outputs the addition result to a decoding circuit 107-1. The adder 211 adds up control signals (Cn) whose phase variation has been restituted by the multiplier 209 of the respective fingers and outputs the addition result to a decoding circuit 107-2.

The decoding circuits 107-1 and 107-2 are equivalent to the decoding circuit 107 in FIG.6. The decoding circuits 107-1 carries out forward error correction on the data signal (dn) output from the adder 210. Furthermore, the decoding circuits 107-2 carries out forward error correction on the control signal (Cn) output from the adder 211. A recoding circuit 108-1 and recoding circuit 108-2 are equivalent to the recoding circuit 108 in FIG. 6. The receding circuit 108-1 recedes the decoding result of the data signal (dn) output from the decoding circuit 107-1. The receding circuit 108-2 recodes the decoding result of the control signal (Cn) output from the decoding circuit 107-2.

A multiplier 212 and multiplier 213 are equivalent to the multiplier 109 in FIG.6. The multiplier 212 multiplies the control signal despread by the despreading circuit 102-2 by a complex conjugate of the signal output from the recoding circuit 108-2 and outputs the multiplication result to a multiplier 215. Furthermore, the multiplier 213 multiplies the data signal despread by the despreading circuit 102-1 by a complex conjugate of the signal output from the recoding circuit 108-1 and outputs the multiplication result to a multiplier 216. In this way, it is possible to remove the data demodulation component of the signal sections (Cn, dn) other than the pilot signals and generate simulated pilot signals.

The multiplier 214, multiplier 215, multiplier 216 and adder 217 are equivalent to the weighted addition section 110 in FIG.6. Each multiplier multiplies respective weighting factors of pilot signals and simulated pilot signals. That is, multiplier 214 multiplies the multiplication result of the multiplier 201 by a weighting factor $\gamma_{PL}$. The multiplier 215 multiplies the multiplication result of the multiplier 212 by a weighting factor $\gamma_{Cn}$. The multiplier 216 multiplies the multiplication result of the multiplier 213 by a weighting factor $\gamma_{dn}$. The respective multiplication results are output to the adder 217. In the initial stage (q=0), the multiplier 214, multiplier 215 and multiplier 216 multiply weighting factor 0.

The adder 217 adds up the weighted in-phase added values of pilot signals and the weighted in-phase added values of simulated pilot signals of the multiplier 214, multiplier 215 and multiplier 216, and output the addition results to the delayer 203 and multiplier 205 after the initial stage (q>0) when a switch 1 (S1) makes a connection with the output terminal of the adder 217.

Then, the operation of the reception apparatus of this embodiment will be explained using FIG.6 and FIG.7. FIG.6 and FIG.7 illustrate examples where the reception apparatus according to this embodiment is applied to an uplink of W-CDMA. On the uplink of W-CDMA, a data channel (channel for communicating a data signal) and a control channel (channel for communicating a control signal such as a pilot signal) are IQ-multiplexed with an in-phase component and a quadrature phase component, respectively further HPSK (Hybrid Phase Shift Keying) modulated by a scrambling code and transmitted.

In FIG.6, a received signal is A/D-converted at the A/D converter 101 and output to the despreading circuit 102. The A/D-converted received signal is despread at the despreading circuit 102 and the despread pilot signals are output to the multiplier 103. The despread data signal (dn) and control signal (Cn) are output to the coherent detection circuit 105 and multiplier 109, respectively.

The despread pilot signals are multiplied by a complex conjugate with a known pilot pattern at the multiplier 103 of the reception apparatus. The in-phase added values obtained at the multiplier 103 are output to the channel estimation circuit 104 and weighted addition circuit 110. The despread data signal (dn) and control signal (Cn) are multiplied by the complex conjugate of the signal output from the recoding circuit 108 at the multiplier 109, the data modulation component is thereby removed and simulated pilot signals are generated. The generated simulated pilot signals are output to the weighted addition circuit 110.

The in-phase added values of the pilot signals output from the multiplier 103 and simulated pilot signals output from the multiplier 109 are multiplied by weighting factors at the weighted addition circuit 110 and the respective multiplication results are added up in phase and output to the channel estimation circuit 104.

For the in-phase added values of the pilot signals output from the multiplier 103, the channel estimation circuit 104 calculates a channel estimated value in the initial stage (q=0). Furthermore, for the in-phase added values output from the weighted addition circuit 110, the channel estimation circuit 104 calculates a channel estimated value after the initial stage (q>0).

Here, focused on the channel estimation circuit 104 and weighted addition circuit 110, their detailed operations will be explained using FIG.7. The in-phase added value calculated from the multiplier 201 (corresponds to the multiplier 103 in FIG.6) is output to the delayer 202, multiplier 204 and multiplier 214. Suppose the slot in which the despread signals at this time are included is equivalent to the slot at the time of channel estimation.

The in-phase added value of the pilot signals output from the multiplier 201 is multiplied by a weighting factor $\gamma^{PL}$ at the multiplier 214 and output to the adder 217.

The despread control signal (Cn) output from the despreading circuit 102-2 is multiplied by a complex conjugate of the control signal (Cn) output from the recoding circuit 108-2 at the multiplier 212 and simulated pilot signals are output to the multiplier 215. The simulated pilot signals output from the multiplier 215 are multiplied by weighting factor $\gamma^{Cn}$ and output to the adder 217.

The despread data signal (dn) output from the despreading circuit 102-1 is multiplied by a complex conjugate of the data signal (dn) output from the recoding circuit 108-1 at the multiplier 213 and output to the multiplier 216 as a simulated pilot signal. The simulated pilot signal output from the multiplier 213 is multiplied by weighting factor $\gamma^{dn}$ and output to the adder 217. However, in the initial stage (q=0), weighting factors $\gamma^{PL}$, $\gamma^{Cn}$ and $\gamma^{dn}$ are set to 0.

The weighted pilot signals and simulated pilot signals output from the multiplier 214, multiplier 215 and multiplier 216 are added up in phase at the adder 217.

In the initial stage (q=0) of iterative channel estimation, the switch 1 (S1) is connected to the output terminal of the delayer 202. Here, in the initial stage (q=0), the simulated pilot signals are likely to include errors, and therefore by connecting the switch 1 (S1) to the output terminal of the delayer 202, it is possible to perform channel estimation only using pilot signals.

On the other hand, after the initial stage (q>0) of iterative channel estimation, the switch 1 (S1) is connected to the output terminal of the adder 217. Here, after the initial stage (q>0), the simulated pilot signals are not likely to include errors, and therefore by connecting the switch 1 (S1) to the output terminal of the adder 217, it is possible to perform channel estimation using the addition result including influences of simulated pilot signals in addition to pilot signals.

Here, the operation of the channel estimation circuit 104 in FIG. 6 will be explained divided into stages; the initial stage (q=0) and after initial stage (q>0). In the initial stage (q=0), the in-phase added value output from the multiplier 201 is delayed by 1 slot at the delayer 202. Since the switch 1 (S1) is connected to the output terminal of the delayer 202, the delayed in-phase added value is output to the delayer 203 and multiplier 205.

The delayer 203 delays the in-phase added value output from the delayer 202 by 1 slot and outputs to the multiplier 206.

The in-phase added value output from the multiplier 201 is multiplied by a weighting factor $\alpha_{n+k}$ at the multiplier 204 and output to the adder 207. Furthermore, the delayed in-phase added value output from the delayer 202 is multiplied by a weighting factor $\alpha_n$ at the multiplier 205 and output to the adder 207. The delayed in-phase added value output from the delayer 203 is multiplied by a weighting factor $\alpha_{n-k}$ at the multiplier 206 and output to the adder 207.

The in-phase added values multiplied by the respective weighting factors output from the multiplier 204, multiplier 205 and multiplier 206 are added up at the adder 207. This addition result is output to the coherent detection circuit 105 in FIG.6 as the channel estimated value.

Then, after the initial stage (q>0), since the switch 1 (s1) is connected to the output terminal of the adder 217, the in-phase added value output from the adder 217 are output to the delayer 203 and multiplier 205.

The delayer 203 delays the in-phase added value output from the multiplier 217 by 1 slot and outputs to the multiplier 206.

The in-phase added value output from the multiplier 201 is multiplied by a weighting factor $\alpha_{n+k}$ at the multiplier 204 and output to the adder 207. The in-phase added value output from the multiplier 217 is multiplied by a weighting factor $\alpha_n$ at the multiplier 205 and output to the adder 207. The delayed in-phase added value output from the delayer 203 is multiplied by a weighting factor $\alpha_{n-k}$ at the multiplier 206 and output to the adder 207.

The in-phase added values multiplied by the weighting factors output from the multiplier 204, multiplier 205 and multiplier 206 are added up at the adder 207. This addition result is output to the coherent detection circuit 105 in FIG.6 as the channel estimated value.

According to WMSA, K channel estimated values before and after the slot in the center are weighted at the multiplier 204, multiplier 205 and multiplier 206 and the respective multiplication results are added up at the adder 207.

Thus, by reducing influences of errors of simulated pilot signals in a stage in which the number of iterations of channel estimation is small, it is possible to perform high accuracy channel estimation.

With reference to FIG.6 again, at the coherent detection circuit 105, the control signal and data signal despread by the despreading circuit 102 are multiplied by a complex conjugate of a channel estimated value and output to the RAKE combining circuit 106. Signals subjected to coherent detection processing at the respective fingers are RAKE-combined at the RAKE combining circuit 106 and output to the decoding circuit 107.

The decoding circuit 107 carries out forward error correction on the RAKE-combined signal. The decoding result is output as decoded data and at the same time output to the recoding circuit 108. Furthermore, the decoding circuit 107 may also be adapted so that the decoded data is output when no error is detected by a CRC (Cyclic Redundancy Check) at the decoding circuit 107 and the decoded data is output to the recoding circuit 108 when some error is detected by a CRC. The decoding result output from the decoding circuit 107 is subjected to coding processing at the recoding circuit 108 and output to the multiplier 109.

Thus, this embodiment carries out channel estimation in the initial stage using only pilot signals instead of using simulated pilot signals which are likely to include errors, and can thereby carry out high accuracy channel estimation with reduced influences of errors of simulated pilot signals, and this embodiment carries out iterative channel estimation after the initial stage using Cn (control signal of the control section) and dn (data signal of the data section) with increased reliability as simulated pilot signals and applying weighted additions not only to pilot signals but also to simulated pilot signals, and can thereby carry out high accuracy channel estimation with a small number of iterations of channel estimation.

By the way, the channel estimation circuit in this embodiment performs changeover by means of a switch so that only pilot signals are used in the initial stage, but it can also be adapted so that weighting factors are controlled without providing any switch.

(Embodiment 2)

This embodiment will describe a case where a hard decision is made on a demodulated signal and simulated pilot signals are generated based on the hard decision result in addition to using only pilot signals for channel estimation in the initial stage, which has been explained in Embodiment 1.

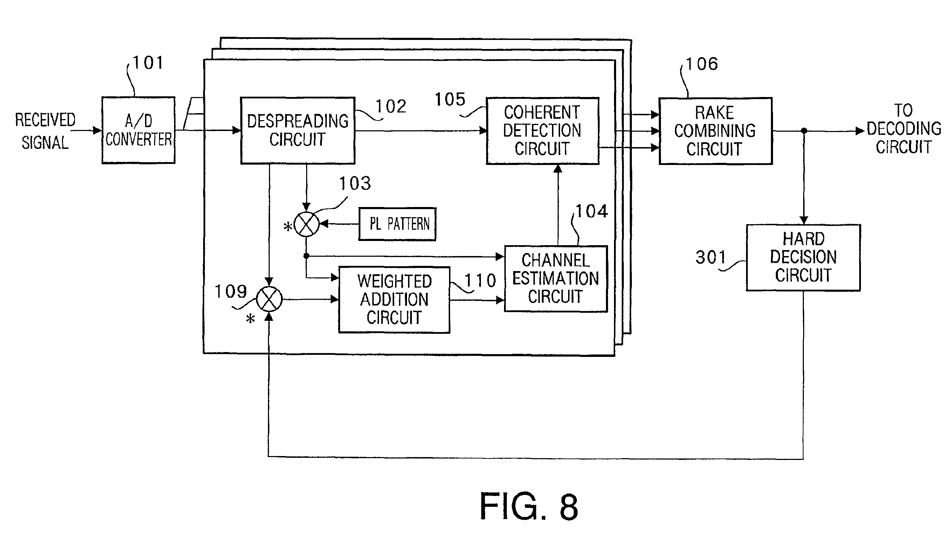

FIG.8 is a block diagram showing a configuration of a reception apparatus according to Embodiment 2 of the present invention. In FIG.8, the components common to those in FIG. 6 are assigned the same reference numerals as those in FIG. 6 and detailed explanations thereof will be omitted. FIG.8 differs from FIG.6 in that while in FIG. 6 a demodulated signal from the RAKE combining circuit 106 is reaches the multiplier 109 through the decoding circuit 107 and recoding circuit 108, in FIG.8 a demodulated signal from a RAKE combining circuit 106 reaches a multiplier 109 through a hard decision circuit 301.

The RAKE combining circuit 106 adds up signals from respective fingers (RAKE combining) and then outputs the RAKE-combined signal to the hard decision circuit 301.

The hard decision circuit 301 makes a decision on whether a signal of the data section and a control signal are positive or negative based on their amplitude components and outputs the decision result to the multiplier 109.

The multiplier 109 multiplies a complex conjugate of the signal subjected to the hard decision by the hard decision circuit 301 by the signal despread by a despreading circuit 102, removes the data modulation component and thereby generates simulated pilot signals. The simulated pilot signals generated are output to a weighted addition circuit 110.

Then, a case where a channel estimation circuit 104 carries out a weighted addition using WMSA will be explained.

The channel estimation circuit 104 carries out channel estimation using pilot signals and applies a weighted addition to the channel estimated values of K slots before and after. Here, for a channel estimated value of an (n-i)th slot (i=1, 2, ..., K) located ahead of an nth slot, a channel estimated value obtained by applying a weighted addition to the in-phase added values of the pilot signals and the in-phase added values of the simulated pilot signals is used.

The process of calculating a channel estimated value at this channel estimation circuit 104 is repeated q times (q=1, 2, ..., Q) at the nth slot.

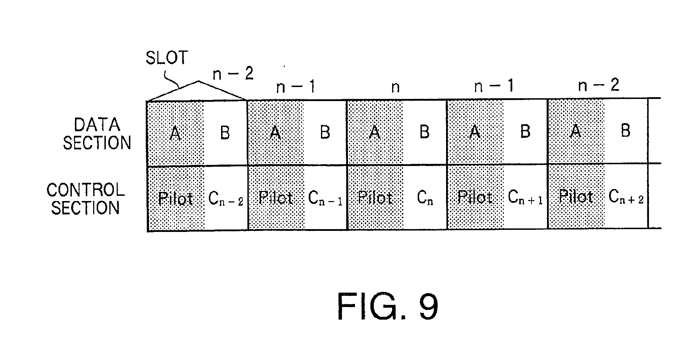

FIG. 9 illustrates a slot format received of a signal by the reception apparatus according to Embodiment 2. As shown in this figure, data signals sent through a data channel and control signals sent through a control channel are IQ-multiplexed. This is a slot format in which pilot signals of the control section are IQ-multiplexed with data A of the data section and control signals of the control section are IQ-multiplexed with data B of the data section.

Then, the operation of the reception apparatus in the above-described configuration will be explained. The operation in this embodiment, which is similar to that in Embodiment 1, will be omitted.

Signals subjected to coherent detection processing (processing of restituting a phase variation) at the coherent detection circuit 105 at the respective fingers are added up (RAKE-combined) at the RAKE combining circuit 106, output to the hard decision circuit 301 and at the same time output to a decoding circuit which is not shown.

The data signal and control signal RAKE-combined at the RAKE combining circuit 106 are subjected to a hard decision at the hard decision circuit 301 and the hard decision result is output to a multiplier 109.

The decision result output from the hard decision circuit 301 is multiplied on the despread data signal and control signal at the multiplier 109, the data modulation component is removed and simulated pilot signals are thereby generated. The generated simulated pilot signals are output to a weighted addition circuit 110. The number of times the data signal after the hard decision is output to the channel estimation circuit again becomes the number of iterations q.

Simulated pilot signals generated by the multiplier 109 are subjected to a weighted addition with pilot signals at the weighted addition circuit 110. At this time, the in-phase added values of the pilot signals and simulated pilot signals are multiplied by their respective weighting factors according to the number of iterations. This allows high accuracy channel estimation with a small number of iterations of channel estimation.

Thus, this embodiment makes a hard decision on demodulated signals, generates simulated pilot signals using the hard decision result and carries out iterative channel estimation, and can thereby speed up the processing compared to Embodiment 1 where demodulated signals are decoded and recoded.

This embodiment has been described taking a case where channel estimation is carried out on the nth slot shown in FIG.9 by applying a weighted addition including one slot before and after the nth slot as an example, but the present invention is not limited to this and it is possible to use values obtained by iterative channel estimation carried out on K (K=1, 2, ···) slots before the nth slot when carrying out a weighted addition for channel estimation.

Furthermore, this embodiment has been described taking a case where channel estimation is carried out using signals transmitted with the control section and data section IQ-multiplexed as an example, but the present invention is not limited to this and it is possible to carry out channel estimation using signals transmitted in any format if at least a plurality of pilot signals stored in slots is channel-estimated and pilot signals and simulated pilot signals are subjected to a weighted addition to repeatedly carry out channel estimation.


(Embodiment 3)

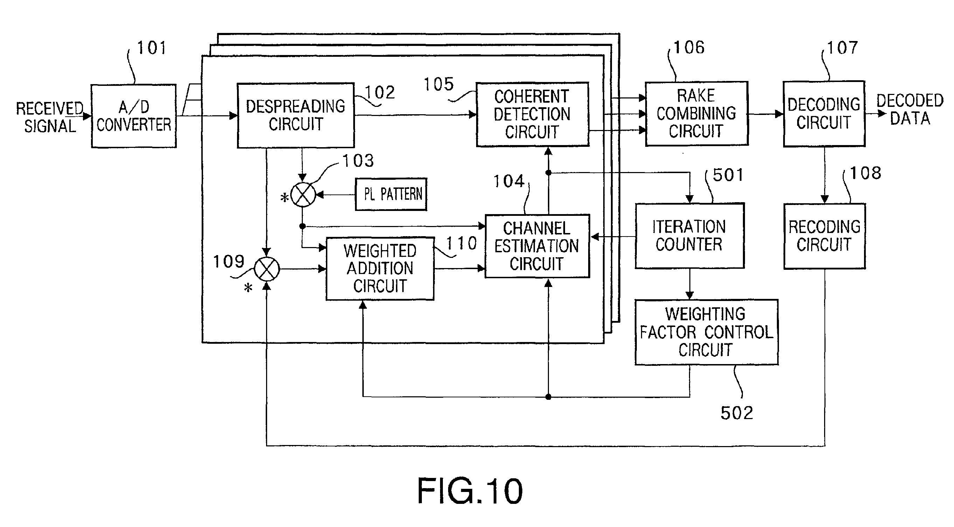

This embodiment will describe a case where weighting factors are controlled during a weighted addition for channel estimation according to the reception quality of demodulated received signals in addition to the number of iterations of channel estimation or CRC error detection with reference to FIG.7, FIG.10, FIG.11 and FIG.12. In FIG.10, FIG.11 and FIG.12, the components common to those in FIG. 6 are assigned the same reference numerals as those in FIG.6 and detailed explanations thereof will be omitted.

In FIG.10, an iteration counter 501 counts an iteration count every time a channel estimation circuit 104 carries out channel estimation and informs a weighting factor control circuit 502 of the iteration count. Furthermore, when the iteration count reaches N, the iteration counter 501 allows the channel estimation circuit 104 to end iterative channel estimation at an nth slot and start iterative channel estimation at the next slot, that is, the (n+1)th slot.

The weighting factor control circuit 502 controls the channel estimation circuit 104 and weighting factors of a weighted addition circuit 110 according to the iteration count of iterative channel estimation counted by the iteration counter 501. With WMSA of the channel estimation circuit 104, the number of errors of demodulated signals decreases as the iteration count increases, and therefore weighting factors of slots before and after the slot in question are reduced. With the weighted addition circuit 110, the reliability of simulated pilot signals increases as the iteration count increases, and therefore weighting factors of simulated pilot signals are increased.

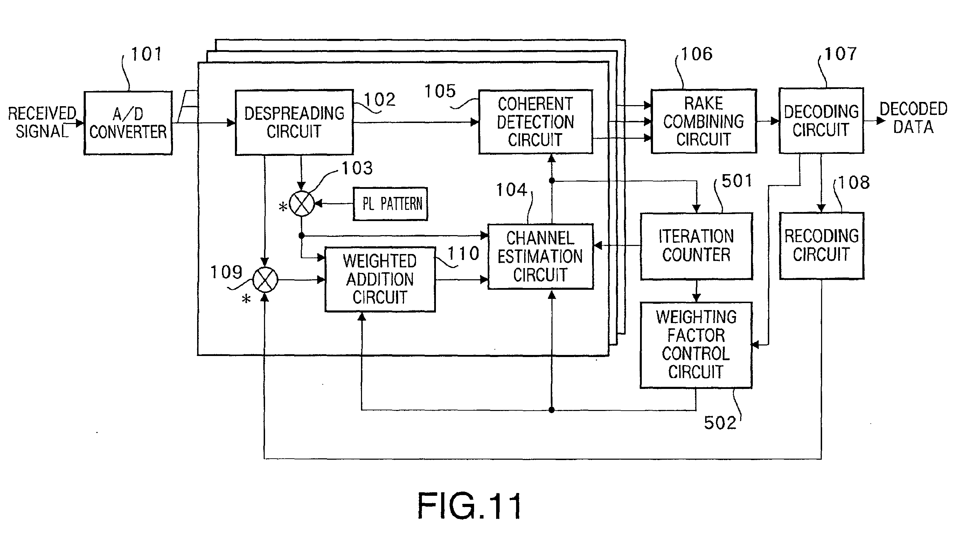

In FIG.11, whether iterative channel estimation is terminated or not is controlled based on the result of CRC detection of a decoding circuit 107. That is, when no error is detected by a CRC, iterative channel estimation is terminated. On the contrary, if when errors are detected by a CRC, iterative channel estimation is continued and the weighting factor control circuit 502 is allowed to control weighting factors according to the iteration count of channel estimation. Since iterative channel estimation continues until no more errors are detected by a CRC or unless the iteration count reaches N, the weighting factor control circuit 502 controls the channel estimation circuit 104 so that weighting factors of slots before and after the slot in question are reduced and controls the weighted addition circuit 110 so that weighting factors of simulated pilot signals are increased as the iteration count increases.

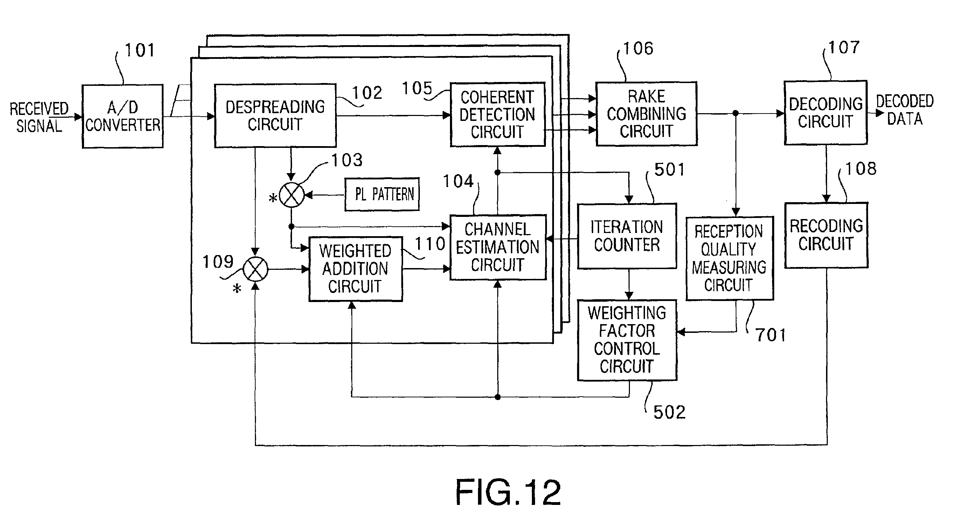

In FIG.12, weighting factors are controlled based on the reception quality after demodulation. Areception quality measuring circuit 701 measures reception quality using a demodulated signal output from a RAKE combining circuit 106 and outputs to the weighting factor control circuit 502.

The weighting factor control circuit 502 changes weighting factors used at the channel estimation circuit 104 and weighted addition circuit 110 according to the measurement result of the reception quality measuring circuit 701 and the iteration count of channel estimation at the iteration counter 501. When the reception quality is good, there are fewer errors and so weighting factors of slots before and after the slot in question are decreased and weighting factors of simulated pilot signals are increased. When the reception quality is bad, weighting factors of slots before and after the slot in question are increased and weighting factors of simulated pilot signals are decreased. Then, it is possible to combine weighting factor controls according to the iteration count, CRC error detection and the reception quality of demodulated received signals.

The part, which informs the iteration counter 501 that iterative channel estimation is in progress, is not limited to the channel estimation circuit 104. Moreover, the reception quality measuring circuit 701 in FIG.12 has been explained taking a case where it is located after the RAKE combining circuit 106 as an example, but it does not matter where it is installed.

Next, the above-described control of the weighting factors will be explained in more detail. With the multiplier 204, multiplier 205 and multiplier 206 shown in FIG.7, weighting factors applied to channel estimated values at the respective slots differ and can be changed every iterative count of channel estimation (here, one slot before and after the nth slot in the center are applied to a weighted addition). When the iteration count is small, a weighting factor used as a channel estimated value of the nth slot is increased and multiplied by the multiplier 205. Since an iterative channel estimated value is used as the channel estimated value of the (n-1) th slot, a weighting factor on par with the weighting factor used for the nth slot is multiplied at the multiplier 206. Since the channel estimated value at the (n+1)th slot is an in-phase added value of pilot signals, a noise influence is greater than that of the (n-1)th slot, and therefore the weight is reduced.

As the iteration count increases, the weighting factor is approximated to 0 to reduce the influence of the (n+1) th slot and the weighting factor of the (n-1)th slot is also reduced. However, since an iterative channel estimated value is used as the channel estimated value of the (n-1)th slot, it never becomes smaller than the weighting factor used for the (n+1)thslot. Since channel estimation is carried out recursively, the accuracy of the channel estimated value of the nth slot in the center is increased, and therefore this is intended to prevent influences of other slots from being considered.

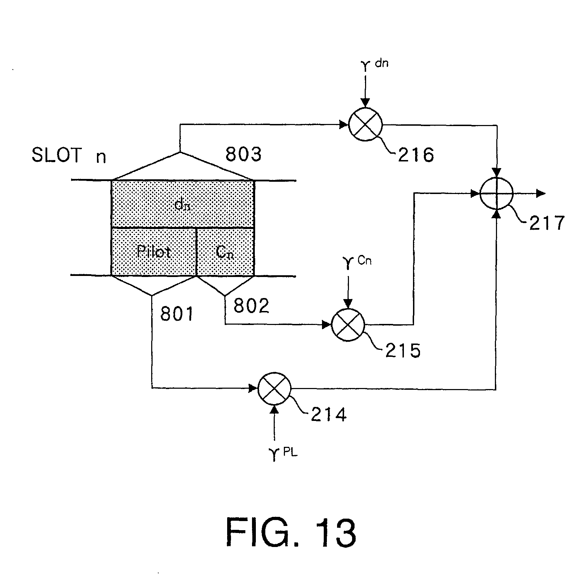

FIG.13 is a schematic view conceptually illustrating the weighted addition circuit of the reception apparatus according to Embodiment 3 of the present invention. In FIG.13, the components common to those in FIG.7 are assigned the same reference numerals as those in FIG.7 and detailed explanations thereof will be omitted.

During iterative channel estimation, when the iteration count is 1 or greater, a simulated pilot signal of a control signal Cn 802 stripped of a data modulation component and a simulated pilot signal of a data signal dn 803 stripped of a data modulation component are subjected to a weighted addition in addition to in-phase added value of a pilot signal 801 output from the despreading circuit 102. Suppose the weighting factor to be multiplied on the in-phase added value of the pilot signal 801 at the multiplier 214 is $\gamma^{PL}$, the weighting factor to be multiplied on the simulated pilot signal of Cn 802 at the multiplier 215 is $\gamma^{Cn}$, and the weighting factor to be multiplied on the simulated pilot signal of dn 803 at the multiplier 216 is $\gamma^{dn}$. Furthermore, when $N_{PL}$, $N_{Cn}$ and $N_{dn}$ are used as the number of symbols, the channel estimated value is calculated according to the following expression (4):

[Mathematical expression 4]

$$\xi_l^{(q)}(m) = \frac{1}{N_{PL}} \gamma_{PL} \sum_{i=0}^{N_{PL}-1} z_l(i) + \frac{1}{N_{Cn}} \gamma_{Cn} \sum_{i=N_{PL}}^{N_{PL}+N_{Cn}-1} z_{Cn}(i) + \frac{1}{N_{dn}} \gamma_{dn} \sum_{i=0}^{N_{dn}-1} z_{dn}(i) \ldots \quad (4)$$

where q denotes an iteration count of iterative channel estimation. Furthermore, weighting factors at the data section are provided considering the fact that the data section and control section have different energy levels.

When the iteration count is small, there are influences of signal errors in hard decision or decoding, and therefore weighting factors used for in-phase added values of pilot signals are increased to a maximum. On the other hand, weighting factors of the simulated pilot signal of the control signal Cn 802 stripped of the data modulation component and the simulated pilot signal of the data signal dn 803 are decreased.

When the iteration count is large, the number of errors in signals subjected to a hard decision or decoding is decreased, and therefore weighting factors other than in-phase added values of pilot signals are increased.

Here, a case where the accuracy of channel estimated values obtained in Embodiment 1 and Embodiment 2 is further increased will be explained. As in the case of Embodiment 1 and Embodiment 2, this embodiment can change weighting factors during WMSA at some midpoint of a slot.

In FIG.7 or FIG.9, channel estimation is carried out using an in-phase added value of pilot signals and applying a weighted addition to K slots before and after the nth slot in the center. Here, the slot is divided into blocks including several symbols (e.g., data A and data B in FIG.9), proportions of weighting factors are changed individually using the multiplier 204, multiplier 205 and multiplier 206 that assign weights with channel estimatedvalues of the respective slots. Then, a channel estimated value at the nth slot is calculated.

More specifically, when an amount of phase rotation between slots is small, a phase variation within a slot is gentle and it is possible to obtain high accuracy channel estimated values using channel estimation according to Embodiment 1, Embodiment 2 and conventional system 2, and therefore the same weighting factor is used as a channel estimated value of each slot for every iteration count of channel estimation.

When an amount of phase rotation between slots is large, as shown in FIG.9, the inside of each slot is divided into several blocks (e.g., data A and data B are divided into the same number of symbols) to change a weighting factor assigned to a multiplier when a weighted addition is carried out. Thus, there is not only one channel estimated value within a slot but a number of channel estimated values are provided according to blocks within a slot, which can prevent deterioration of reception quality of an information signal even when an amount of phase rotation is large.

Thus, this embodiment controls weighting factors at the channel estimation circuit according to the number of iterations of channel estimation at the nth slot or CRC error detection and reception quality of demodulated received signals, and can thereby carry out high accuracy channel estimation.

(Embodiment 4)

This embodiment will describe a case where channel estimated values are interpolated slot by slot at a channel estimation circuit and the channel estimated values are calculated symbol by symbol or block by block.

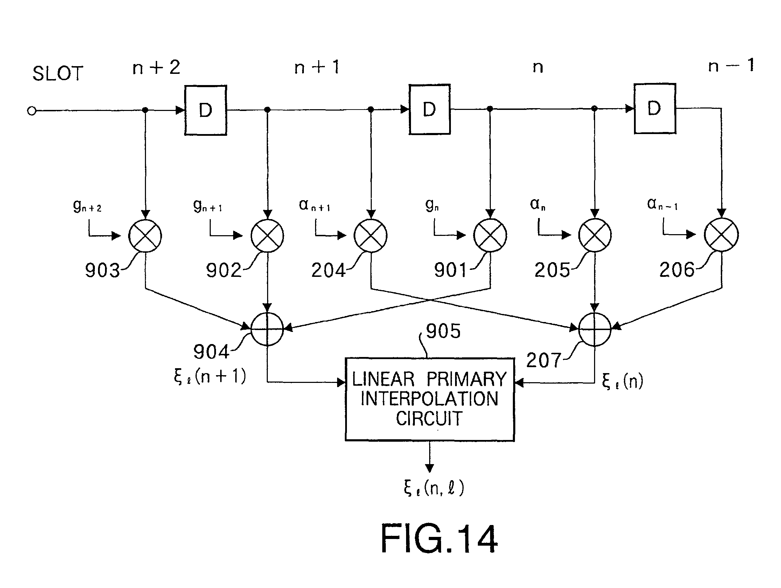

FIG.14 is a schematic view illustrating a channel estimation circuit according to Embodiment 4 of the present invention. In FIG.14, the components common to those in FIG.7 are assigned the same reference numerals as those in FIG.7. Interpolation is not limited to linear primary interpolation below.

The channel estimation circuit shown in FIG.14 repeats channel estimation N times and obtains channel estimated values symbol by symbol between slots using channel estimated values at an nth slot and (n+1)th slot.

In FIG.14, channel estimated values of one slot (generally K slots: K=1, 2, ⋯) before and after the nth slot are secured in a delayer. Using a channel estimated value $\xi(n)$ at the nth slot in which iterative channel estimation is carried out and an in-phase added value $\xi(n+1)$ of pilot signals at the (n+1)th slot, it is possible to show how channel estimated values are interpolated slot by slot as expressed in expression (5) :

[Mathematical expression 5]

$$\xi_l(n,l) = \xi_l(n) + \frac{\xi_l(n+1) - \xi_l(n)}{S} \times l \tag{5}$$

where S denotes the total number of symbols stored in 1 slot and l denotes the number of symbols corresponding to the calculated channel estimated value.

In Embodiment 1 above, iterative channel estimation has already been carried out at the nth slot, and therefore a high accuracy channel estimated value can be obtained at the nth slot. However, the channel estimated value at the (n+1)th slot at this time is an in-phase added value of a pilot signal and the accuracy cannot be said to be high.

In contrast, this embodiment carries out a weighted addition centered on the (n+1)th slot using the nth slot for which iterative channel estimation has been carried out in order to increase the accuracy of the channel estimated values at the (n+1)th slot.

Here, the channel estimation circuit shown in FIG. 14 will be explained in detail. However, In FIG.14, the components common to those in FIG.7 are assigned the same reference numerals as those in FIG.7. As shown in this figure, the channel estimated value at the nth slot is calculated as follows. That is, the channel estimated value at the (n-1)th slot (slot for which iterative channel estimation has already been carried out) is multiplied by a weighting factor $\alpha_{n-1}$ at a multiplier 206 and output to an adder 207. Furthermore, the channel estimated value from the nth slot (slot for which iterative processing is currently in progress) is multiplied by a weighting factor $\alpha_n$ at a multiplier 205 and output to the adder 207. Furthermore, the channel estimated value from the (n+1)th slot (slot for which iterative processing has not been carried out yet) is multiplied by a weighting factor $\alpha_{n+1}$ at a multiplier 204 and output to the adder 207. The multiplication results obtained at the multiplier 204, multiplier 205 and multiplier 206 are added up at the adder 207, and a channel estimated value at the nth slot is thereby obtained.

On the other hand, a channel estimated value at the (n+1)th slot will be obtained as follows. That is, the channel estimated value at the nth slot (slot for which iterative channel estimation has already been carried out) is multiplied by a weighting factor $g_n$ at a multiplier 901 and output to an adder 904. Furthermore, the channel estimated value at the (n+1)th slot (slot for which iterative channel estimation has not been carried out yet) is multiplied by a weighting factor $g_{n+1}$ at a multiplier 902 and output to the adder 904. Furthermore, the channel estimated value at the (n+2)th slot (slot for which iterative channel estimation has not been carried out yet) is multiplied by a weighting factor $g_{n+2}$ at a multiplier 903 and output to the adder 904. The multiplication results obtained at the multiplier 901, multiplier 902 and multiplier 903 are added up at the adder 904, and a channel estimated value at the (n+1)th slot is thereby obtained.

Then, the control over weighting factors when a (n+1)th channel estimated value is obtained will be explained. The nth slot has already been subjected to iterative channel estimation and it is a high accuracy channel estimated value, and therefore a weight on par with that of the (n+1)th slot as the central slot is provided. Then, the channel estimated value at the (n+2)th slot is assigned the lightest weight.

The channel estimated values at the nth slot and (n+1)th slot are output to a linear primary interpolation circuit 905 and channel estimated value $\xi_1$ (n, sym) is obtained for each symbol. Then, a channel estimated value is assigned to each symbol or each block.

Thus, in order to calculate a channel estimated value at the nth slot, this embodiment interpolates channel estimated values calculated from a weighted addition including the channel estimated values obtained from iterative channel estimation in Embodiment 1 and Embodiment 2 and the channel estimated values obtained through iterative channel estimation on an in-phase added value of the pilot signal at the (n+1)th slot, calculates a channel estimated value for each symbol, and can thereby obtain channel estimated values in response to fading which varies in a cycle shorter than a slot. This makes it possible to reduce signal errors after decoding and demonstrates effectiveness when a signal with large phase rotation is received.

Embodiments 1 to 3 above have been explained taking a case where the reception apparatus according to the present invention carries out a radio communication as an example.

As explained above, when in-phase added values of pilot signals and simulated pilot signals are subjected to a weighted addition in iterative channel estimation, it is possible to improve the accuracy of channel estimation in the initial stage of iterative channel estimation, reduce deterioration of reception quality of data signals and carry out high accuracy channel estimation with a small number of iterations of channel estimation by using weighting factors according to the number of iterations of channel estimation.

This application is based on the Japanese Patent Application No.2001-241245 filed on August 8, 2001, entire content of which is expressly incorporated by reference herein.

Industrial Applicability

The present invention is preferably applicable to a radio reception apparatus and radio reception method used for a digital radio communication system.

## Claims

1. A radio reception apparatus comprising:

    a demodulation section that despreads and demodulates a received signal in which a control signal including known signals is multiplexed with an information signal;
    a decoding section that decodes the demodulated received signal;
    a recoding section that recodes the decoded received signal;
    a weighted addition section that generates simulated known signals using the despread received signal and recoded signal and carries out a weighted addition using the generated simulated known signals and known signals; and
    a channel estimation section that carries out iterative channel estimation using the signal subjected to the weighted addition,

    wherein weights assigned to said simulated known signals and said known signals are controlled according to the number of iterations of channel estimation.

2. A radio reception apparatus comprising:

    a demodulation section that despreads and demodulates a received signal in which a control signal including known signals is multiplexed with an information signal;
    a hard decision section that makes a hard decision on the demodulated information signal;
    a weighted addition section that generates simulated known signals using the information signal subjected to the hard decision and the despread received signal and carries out a weighted addition using the generated simulated known signals and known signals; and
    a channel estimation section that carries out iterative channel estimation using the signal subjected to the weighted addition,

    wherein weights assigned to said simulated known signals and said known signals are controlled according to the number of iterations of channel estimation.

3. The radio reception apparatus according to claim 1, wherein weights of simulated known signals are increased as the number of iterations of iterative channel estimation increases.

4. The radio reception apparatus according to claim 1, wherein when no error is detected in the decoded signal, the iterative channel estimation is terminated.

5. The radio reception apparatus according to claim 1, wherein weights are controlled according to the reception quality of the demodulated signal.

6. The radio reception apparatus according to claim 1, wherein the channel estimation section calculates a channel estimated value of a slot to be demodulated by carrying out weighted averaging on channel estimated values of a plurality of slots using said slot to be demodulated and the slots before and after said slot.

7. The radio reception apparatus according to claim 1, wherein the channel estimation section increases the weight of the slot to be demodulated as the number of iterations of channel estimation increases.

8. The radio reception apparatus according to claim 1, wherein the channel estimation section interpolates the channel estimated values calculated for respective slots and calculates channel estimated values symbol by symbol or block by block.

9. A radio base station apparatus provided with the radio reception apparatus according to claim 1, said radio reception apparatus comprising:

   a demodulation section that despreads and demodulates a received signal in which a control signal including known signals is multiplexed with an information signal;
   a decoding section that decodes the demodulated received signal;
   a recoding section that recodes the decoded received signal;
   a weighted addition section that generates simulated known signals using the despread received signal and recoded signal and carries out a weighted addition using the generated simulated known signals and known signals; and
   a channel estimation section that carries out iterative channel estimation using the signal subjected to the weighted addition,

   wherein weights assigned to said simulated known signals and said known signals are controlled according to the number of iterations of channel estimation.

10. A mobile communication terminal apparatus provided with the radio reception apparatus according to claim 1, said radio reception apparatus comprising:

    a demodulation section that despreads and demodulates a received signal in which a control signal including known signals is multiplexed with an information signal;
    a decoding section that decodes the demodulated received signal;
    a recoding section that recodes the decoded received signal;
    a weighted addition section that generates simulated known signals using the despread received signal and recoded signal and carries out a weighted addition using the generated simulated known signals and known signals; and
    a channel estimation section that carries out iterative channel estimation using the signal subjected to the weighted addition,

    wherein weights assigned to said simulated known signals and said known signals are controlled according to the number of iterations of channel estimation.

11. A radio reception method comprising:

    a demodulation step of despreading and demodulating a received signal in which a control signal including known signals is multiplexed with an information signal;
    a decoding step of decoding the demodulated received signal;
    a recoding step of recoding the decoded received signal;

a weighted addition step of generating simulated known signals using the despread received signal and recoded signal and carrying out a weighted addition using the generated simulated known signals and known signals; and
a channel estimating step of carrying out iterative channel estimation using the signal subjected to the weighted addition,

wherein weights assigned to said simulated known signals and said known signals are controlled according to the number of iterations of channel estimation.

12. A radio reception method comprising:

a demodulating step of despreading and demodulating a received signal in which a control signal including known signals is multiplexed with an information signal;
a hard decision step of making a hard decision on the demodulated information signal;
a weighted addition step of generating simulated known signals using the information signal subjected to the hard decision and the despread received signal and carrying out a weighted addition using the generated simulated known signals and known signals; and
a channel estimation step of carrying out iterative channel estimation using the signal subjected to the weighted addition,

wherein weights assigned to said simulated known signals and said known signals are controlled according to the number of iterations of channel estimation.

13. The radio reception method according to claim 11, wherein in the channel estimation step, a channel estimated value of a slot to be demodulated is calculated by carrying out weighted averaging on channel estimated values of a plurality of slots using said slot to be demodulated and the slots before and after said slot.

14. The radio reception method according to claim 11, wherein in the channel estimation step, the channel estimated values calculated for respective slots are interpolated and channel estimated values are calculated symbol by symbol or block by block.

EP 1 322 045 A1

SLOT

|  | n − 2 | n − 1 | n | n + 1 | n + 2 |
|---|---|---|---|---|---|
| DATA SECTION | $d_{n-2}$ | $d_{n-1}$ | $d_n$ | $d_{n+1}$ | $d_{n+2}$ |
| CONTROL SECTION | Pilot \| $C_{n-2}$ | Pilot \| $C_{n-1}$ | Pilot \| $C_n$ | Pilot \| $C_{n+1}$ | Pilot \| $C_{n+2}$ |

11  12  13

PILOT BLOCK

# FIG. 1

FIG. 2

FIG. 3

EP 1 322 045 A1

FIG. 4

EP 1 322 045 A1

FIG. 5

FIG. 6

EP 1 322 045 A1

FIG. 7

FIG. 8

EP 1 322 045 A1

SLOT

| | n − 2 | n − 1 | n | n − 1 | n − 2 |
|---|---|---|---|---|---|
| DATA SECTION | A  B | A  B | A  B | A  B | A  B |
| CONTROL SECTION | Pilot  $C_{n-2}$ | Pilot  $C_{n-1}$ | Pilot  $C_n$ | Pilot  $C_{n+1}$ | Pilot  $C_{n+2}$ |

# FIG. 9

FIG.10

EP 1 322 045 A1

RECEIVED SIGNAL → **101** A/D CONVERTER

**102** DESPREADING CIRCUIT

**103** PL PATTERN

**105** COHERENT DETECTION CIRCUIT

**104** CHANNEL ESTIMATION CIRCUIT

**110** WEIGHTED ADDITION CIRCUIT

**109**

**106** RAKE COMBINING CIRCUIT

**501** ITERATION COUNTER

**502** WEIGHTING FACTOR CONTROL CIRCUIT

**107** DECODING CIRCUIT → DECODED DATA

**108** RECODING CIRCUIT

# FIG.11

FIG.12

FIG. 13

FIG.14

EP 1 322 045 A1

## INTERNATIONAL SEARCH REPORT

| International application No. |
|---|
| PCT/JP02/08102 |

**A. CLASSIFICATION OF SUBJECT MATTER**
Int.Cl⁷ H04B1/707

According to International Patent Classification (IPC) or to both national classification and IPC

**B. FIELDS SEARCHED**

Minimum documentation searched (classification system followed by classification symbols)
Int.Cl⁷ H04B1/69-1/713, H04J13/00-13/06

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | Shingo SUWA et al. "MC/DS-CDMA Broadband Packet Denso ni okeru Kosoku Phasing ni Tsuiju Kanona Kurikaeshi Pass Search Channel Suiteiho", 18 July, 2000 (18.07.00), The Institute of Electronics, Information and Communication Engineers, Gijutsu Kenkyu Hokoku, RCS 2000-67, page 112, right column, lines 5 to 12, 23 to 24; page 113, left column, line 6 to 7; Fig. 2 | 1-3,5-14<br>4 |
| Y | JP 10-233754 A (Oki Electric Industry Co., Ltd.), 02 September, 1998 (02.09.98), Page 2, left column, lines 7 to 11 & US 6044119 A | 2,12 |

☒ Further documents are listed in the continuation of Box C.　　☐ See patent family annex.

| | |
|---|---|
| \* Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>18 October, 2002 (18.10.02) | Date of mailing of the international search report<br>29 October, 2002 (29.10.02) |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

| International application No. |
| --- |
| PCT/JP02/08102 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 10-290209 A (Oki Electric Industry Co., Ltd.), 27 October, 1998 (27.10.98), Par. Nos. [0092], [0093] (Family: none) | 1-3,5-14 |
| Y | JP 2001-168770 A (Sharp Corp.), 22 June, 2001 (22.06.01), Par. Nos. [0022], [0024] (Family: none) | 1-3,5-14 |
| Y | WO 99/55033 A (NTT Mobile Communications Network Inc.), 28 October, 1999 (28.10.99), Pages 10 to 11 & EP 9955033 A1 & CN 1266569 A | 1-3,5-14 |
| E,X | JP 2002-300085 A (Matsushita Electric Industrial Co., Ltd.), 11 October, 2002 (11.10.02), Full text (Family: none) | 1-14 |

Form PCT/ISA/210 (continuation of second sheet) (July 1998)